# EUROPEAN PATENT SPECIFICATION

(11) **EP 1 645 484 B1**
(45) Date of publication and mention of the grant of the patent: **10.04.2019**
(21) Application number: 05388083.7
(22) Date of filing: 06.10.2005
(51) Int. Cl.: B62B 3/10, B62B 3/04, E04G 21/16

(54) **A set of elements for handling construction boards, such as plaster boards**
Elemente zur Handhabung von Bauplatten, wie beispielsweise Gipskartonplatten
Elements de manutention des panneaux de construction comme des plaques de plâtre

(30) Priority: 06.10.2004 DK 200401533
(43) Date of publication of application: 12.04.2006
(73) Proprietor: MountIT Development A/S, 6760 Ribe (DK)
(72) Inventor: Thøgersen, Lars, 2300 Copenhagn S (DK); Wallace, James, 1356 Copenhagen K (DK); Breck, Rasmus Halfdan, 2300 Copenhagen S (DK)
(74) Representative: Inspicos P/S

(56) References cited:
- WO-A-95/25210
- WO-A-02/064325
- DE-A1- 3 834 311
- DE-A1- 4 320 454
- DE-A1- 19 951 807
- DE-U1- 20 219 061
- GB-A- 2 230 235
- GB-A- 2 318 563
- US-A- 2 846 233
- US-A- 3 923 167
- US-A- 4 175 899
- US-A- 5 762 348
- US-A1- 2003 127 834

## Description

### Technical field

The present invention relates to a set of elements for handling construction boards, such as plaster boards, which facilitates handling of such construction boards at construction sites, e.g. in the interior of buildings. A preferred embodiment also relates to a mounting device for lifting and mounting construction boards, which provides improved manoeuvring capabilities. The mounting device can be used either with or without the set of elements.

### Background of the invention

Plaster boards are widely employed as wall or roof boards in the interior as well as at the exterior of buildings, not only at newly erected offices or homes, but also in the renovation of old constructions. The panels are most often secured to a fixed supporting structure, such as to a girder of a bearing structure, by means of screws. For example, each construction board may be fastened to the supporting structure by six screws for a temporary fixing. Typically, 40 screws are used for the final fixing. Typical plaster boards usually have a surface area of approximately 3 m² and weigh approximately 20 kg. It will thus be understood that handling of a plaster board at a construction site is rather labour intensive, and that handling of the boards is a dangerous task, as the construction boards are often to be secured at an overhead mounting spot or at a wall section well above the floor.

In order to facilitate mounting of construction boards, the prior art has been proposed to provide a lifting device, in which the construction boards are gripped and held in place in relation to a frame structure, the lifting device further incorporating a pneumatic cylinder for providing a lifting force. The frame structure may be supported by four wheels, so as to allow the lifting device to be conveyed along a floor. However, it has been found that there exists a need for a system which further facilitates handling of construction boards in terms of conveying stacks of plaster boards at construction sites and in terms of exactly positioning plaster boards at their mounting spots.

DE 199 51 807 relates to a storage unit where a stack of plates can be tilted to a more upright position or placed horizontally. US 4 175 899, and DE 38 34 311 disclose different types of mounting devices for the raising and lowering of single building sheets or panels. Further, a handling apparatus is known from US 3923167, where the apparatus is constructed for the handling of a heavy door and which can be both tilted to a more upright position or turned about by a centrally placed turning plate.

### Summary of the invention

It is an object of preferred embodiments of the invention to provide a system which allows for convenient transportation of stacks of construction boards or of individual construction boards at construction sites. More specifically, it is an object of preferred embodiments of the invention to provide a system, which makes it possible to convey the construction boards through relatively narrow passages, e.g. through door openings, and which allows for easy positioning of the construction boards in the vicinity of their mounting spot. It is a further object of preferred embodiments of the invention to provide a system which allows for easy and exact manoeuvring of the construction boards when conveyed along the floor and during final positioning at a mounting spot, e.g. at an overhead roof spot or at a wall section.

The invention provides a set of elements for handling construction boards, such as plaster boards, the set of elements comprising a storage unit for supporting, storing and optionally transporting a stack of the construction boards, and a cart for supporting the stack of construction boards and for conveying the stack of construction boards to the storage unit, and according to claim 1. In an embodiment the set of elements further comprises a mounting device for lifting and mounting the construction boards, the mounting device comprising a powered board positioning system for removing one of the construction boards at a time from the storage unit. The board position positioning system may be adapted to remove the construction board when it is in its second, tilted position and/or when it is in a horizontal position, e.g. when it lies on a pair of trestles. The set of elements further comprises a coupling system for coupling, i.e. for releasably securing, the storage unit to the mounting device.

It will be appreciated that the storage unit, which is separate from the mounting device, but which may be coupled thereto, allows for convenient transportation of the stack of construction boards at a construction site, as the storage unit with the stack of construction boards may be conveyed separately from a stock of construction boards to a mounting area, e.g. a specific room of a building. The storage unit and the mounting device may be coupled together once the storage unit with the construction boards has arrived at the mounting area, such coupling serving the purpose of properly aligning the mounting device and the stack of construction boards. Thus, at the mounting area, the storage unit and the mounting device may be moved together, e.g. by rolling the mounting device over the ground. The mounting device can also supply the motive power to move the storage unit.

In the present context, the term 'mounting area' should be understood as any location within convenient proximity to the mounting spot.

In order to allow for further flexibility in the transportation of construction boards to the mounting area, the set of elements comprises a cart for supporting the stack of construction boards and for conveying the stack of construction boards to the storage unit. The cart is provided with a board transferring system for transferring the stack of construction boards from the cart to the storage unit. For example, the cart and the storage device may be mutually coupled when a board supporting frame of the storage device is in its horizontal position, so that the stack of construction boards may be lowered by a lifting system of the cart down onto the frame of the storage device, and/or vice versa. The cart comprises means for tilting the stack of construction boards to transfer the construction boards to the storage device in the second, tilted position of the storage device. Moreover, the cart comprises means for tilting the stack of construction boards, so that the construction boards may be conveyed while tilted, so as to allow the stack of construction boards to pass through narrow passages. In a preferred embodiment, the cart comprises means for tilting the construction boards around two different axes, one which essentially coincides with the construction boards' shortest edge to raise the construction boards to an upright position, in which the construction boards may be transferred to the storage unit, and another axis which essentially coincides with the construction boards' longest edge to allow for passage through narrow passages and/or passages with low free heights.

The mounting device may further comprise a construction board supporting structure including at least one powered construction board securing device, such as a screwing and/or nailing machine or a plurality of screwing or nailing machines, for securing the construction board at a mounting spot. The screwing or nailing machine(s) may be driven by vacuum or by electrical power. Most preferably, there is provided a plurality of board securing devices, so that the construction boards may be fixed to their support at the construction site without the need for any supplementary fixing operation. However, embodiments are envisaged, in which the board securing device(s) only bring about an initial fixing of the construction boards, so that the final fixing is completed in a subsequent manual operation or via the use of an additional securing device. The mounting device may further include means for aligning and positioning the construction board with the board supporting structure to ensure that the board securing device is correctly positioned relative to the board securing device or devices.

As indicated above, the storage unit includes a frame which is tiltable between a first, essentially horizontal position and a second, tilted position. The frame is pivotally connected to a wheel structure with a plurality of wheels for conveying the storage unit along a floor surface. The frame is advantageously connected to the wheel structure at or near one end of the frame, and it comprises a supporting member at a distance from said end, e.g. near an opposite, second end, so that the construction boards may be supported by the supporting member and by the wheels in the horizontal position, and by the wheels solely in said tilted position. In the tilted position, the centre of gravity of the stack of construction boards should lie within a plane spanned by the wheels of the storage unit to ensure a stable support for the construction boards.

In order to couple the storage unit to the mounting device and to subsequently decouple it, the mounting device may include an operating assembly, such as a hand- or foot-operable activation member connected to a clamping system for securing a male coupling rod of the storage unit to a corresponding female receiving portion of the mounting device.

As construction boards, such as in particular plaster boards, come in various sizes, the construction board supporting structure may comprise a mechanism for adjusting a transverse dimension of the construction board supporting structure to take into account different widths of construction boards. Such adjusting is in particular beneficial in embodiments comprising board securing devices, e.g. screwing machines, which should be able to cause a fixing of the construction boards at a predetermined distance from their edges. The adjusting mechanism may, for example, comprise a system of telescopic arms operated by hydraulic or electric actuators, which may be controlled from a user-operable control panel of the mounting device or a mechanical guide positioned relative to the edge of the board.

The board positioning system is preferably arranged to move and rotate the construction boards with at least two rotational and at least three linear degrees of freedom. This may e.g. be achieved by five actuators, two of which are arranged to rotate the board supporting structure about respective axes, and three of which are arranged to linearly displace the board supporting structure in respective directions. The actuators are preferably user-operable from a control panel, from which each actuator may be individually addressed. The actuators may be activated simultaneously in various combinations and to various extents, e.g. with the aid of the joystick control. It will thus be understood that the mounting device offers improved construction board positioning capabilities in comparison to those prior art systems, in which construction boards may only be positioned by positioning a complete mounting device on the floor. As mounting devices are relatively heavy and large, their dimensions in the ground floor being in the order of 1x2 meters, positioning thereof with respect to a mounting spot, which requires a precision within a few centimetres or millimetres, may indeed be a difficult, time-consuming and labour-intensive task. Thanks to the plurality of actuators allowing the board supporting structure to position the construction boards with at least two rotational and three linear degrees of freedom, an operator is only required to roughly position the mounting device relative to the mounting spot. The more precise and final positioning of the construction boards may be carried out by the actuators, which may be accurately controlled by the operator, preferably by means such as the joystick control. It will be appreciated that construction boards may also be conveniently fixed to inclined surfaces such as inclined roof structures and/or at corner sections of walls or ceilings.

The mounting device for lifting and mounting construction boards, such as plaster boards, to a mounting spot at a fixed structure may comprise a ground frame and a powered board positioning system for moving and rotating the construction boards relative to the ground frame, the board positioning system defining at least two rotational and three linear degrees of freedom.

The board positioning system may preferably comprise a board supporting structure and an actuator assembly, the board supporting structure being connected to and supported by the actuator assembly, the actuator assembly being connected to an upright structure supported by the ground frame. The upright structure may advantageously comprise or consist of a telescopic arm, which is secured to the frame and arranged to lift and lower the board supporting structure and the actuator assembly, so as to define a first one of the linear degrees of freedom.

The actuator assembly may comprise a first actuator arranged to cause the board supporting structure to rotate with respect to the upright structure around a first axis, so as to define a first one of the rotational degrees of freedom. The first actuator may be a linear actuator which impacts on a point offset from the axis of rotation. Second and third actuators, preferably linear actuators, may arranged to cause the board supporting structure to be linearly displaced relative to the telescopic arm, so as to define second and third of the linear degrees of freedom.

The board supporting structure and the actuator assembly may be pivotally connected to the upright structure, and the board positioning system may further comprise a fourth actuator for rotating the board supporting structure and the actuator assembly with respect to the upright structure around a second axis, so as to define a second one of the rotational degrees of freedom. The fourth actuator may comprise a linear actuator arranged in or near the upright structure or the telescopic arm with a point of action which is offset from the second axis. In one embodiment, the telescopic arm may be rotated with respect to a fixed section (or tower) of the upright structure. Alternatively, a distal portion of the telescopic may be pivotal relative to a proximal portion thereof.

In order to bring about a third rotational degree of freedom, the actuator assembly may comprise a fifth actuator arranged to rotate the board supporting structure around a third axis.

### Brief description of the drawings

The invention will now be further described with reference to the drawings, in which:
Figs. 1-3 show a storage unit of an embodiment of the set of elements according to invention;
Figs. 4-7 show a cart of an embodiment of the set of elements according to the invention;
Fig. 8 and 9 illustrate transfer of construction boards between the storage unit of Figs. 1-3 and the cart of Figs. 4-7;
Figs. 10 and 11 show the storage unit of Figs. 1-3 coupled to a mounting device of a preferred embodiment of the set of elements according to the invention;
Figs.12 and 13 show a close-up view of actuators of the mounting device of Figs. 10 and 11;
Fig. 14 illustrates a board securing system of the mounting device of Figs. 10 and 11;
Fig. 15 illustrates a wheel system of a conveying device optionally provided in the set of elements according to the invention.

### Detailed description of the drawings

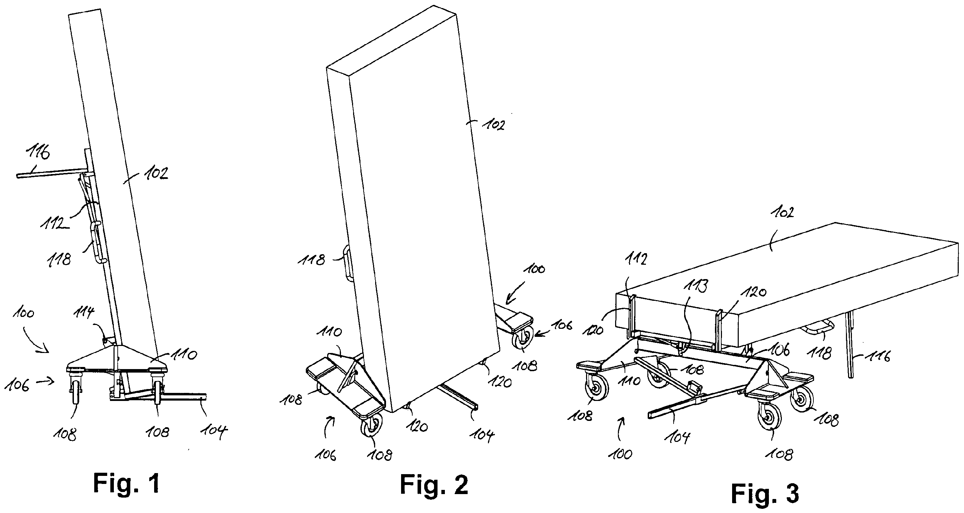

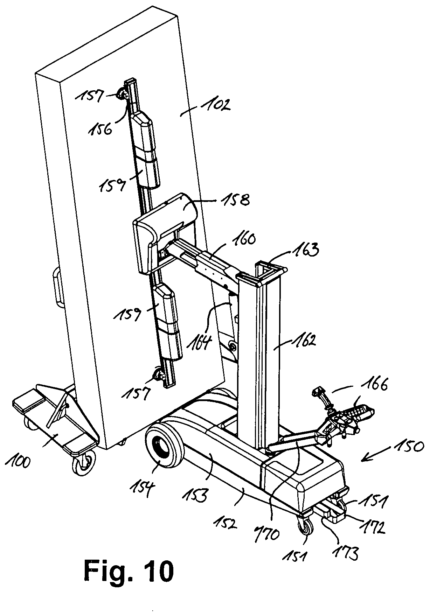

Figs. 1-3 show a storage unit 100 supporting a stack of construction boards 102 in a tilted position (Figs. 1 and 2) and in an essentially horizontal position (Fig. 3). It should be understood that only the outlines of the stack of construction boards 102 are drawn in Figs. 1-3, and that the outlines of each individual construction board is not shown. The stack 102 may, e.g., comprise 1-50 construction boards, such as 20 or 40. The storage unit comprises a male coupling rod 104 for coupling the storage unit to a mounting device, which will be described further with reference to Figs. 10-14 below, and a wheel structure 106 with four wheels 108 for conveying the storage unit along a floor. Each of the wheels 108 is pivotally mounted to a support structure 110, which supports the stack of construction boards 102. The storage unit further has a frame 112 which is pivotally connected to the wheel structure 106, i.e. to the support structure 110, so that the frame is tiltable between the position of Figs. 1 and 2 on the one hand and the position of Fig. 3 on the other hand. In Fig. 1, reference numeral 114 indicates a pivot axis for the frame 112. In the horizontal position of Fig. 3, the frame 112 is supported at one end thereof by the wheel structure 106 and at its opposite end by a supporting member 116, which is also visible in Fig. 1. Preferably, the supporting member 116 is pivotable between the position shown in Figs. 1 and 3 and a position, in which it is essentially parallel to the frame 112. The frame further comprises handgrips 118 which may be used by an operator to manoeuvre the storage unit. In the tilted position of Figs. 1 and 2, the stack of construction boards 102 is supported by the wheel structure 106 solely, as the frame 112 is tilted to such a degree that, in the plane of Fig. 1, the centre of gravity of the construction boards 102 and the frame 112 lies between the two wheels 108. As shown in Figs. 2 and 3, the frame 112 has a pair of supports 120 for the stack of construction boards at that end, which is the lower end in the tilted position of the frame. The storage unit also incorporates two latch devices. A first latch device 112 is to release the coupling latch between the storage unit and the cart, which coupling latch is preferably automatic, and a second latch device (not shown) is to release an automatic latch that secures the support frame in the tilted position from accidental movement back to the horizontal. The latch for securing the support frame from such accidental movement back to the horizontal includes a protruding element 113 for engaging a corresponding member 115.

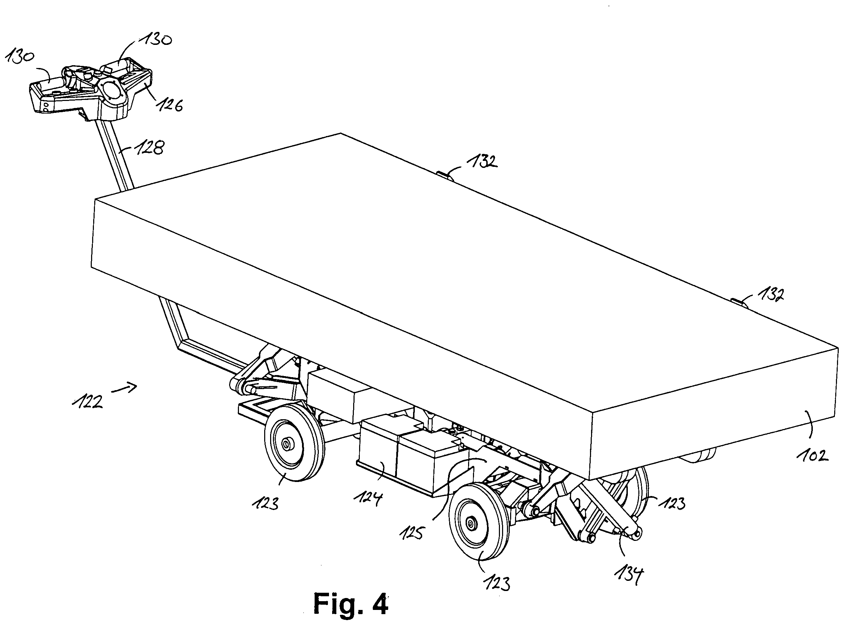

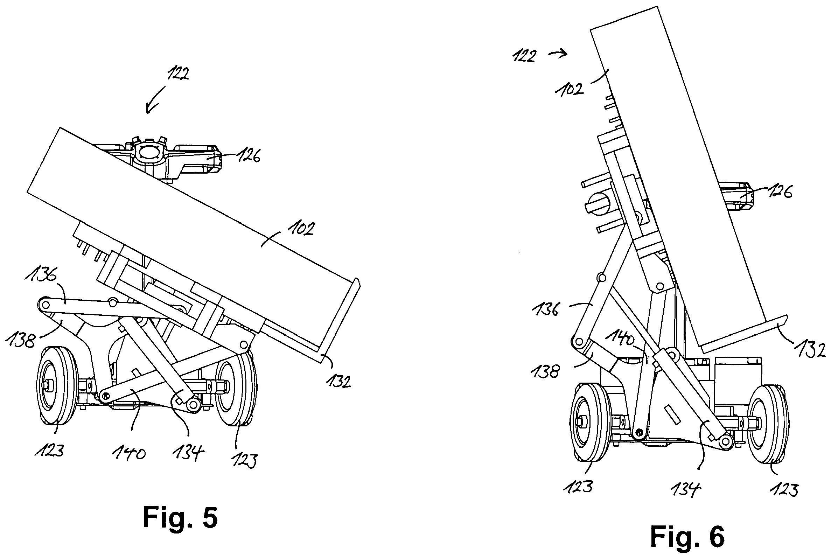

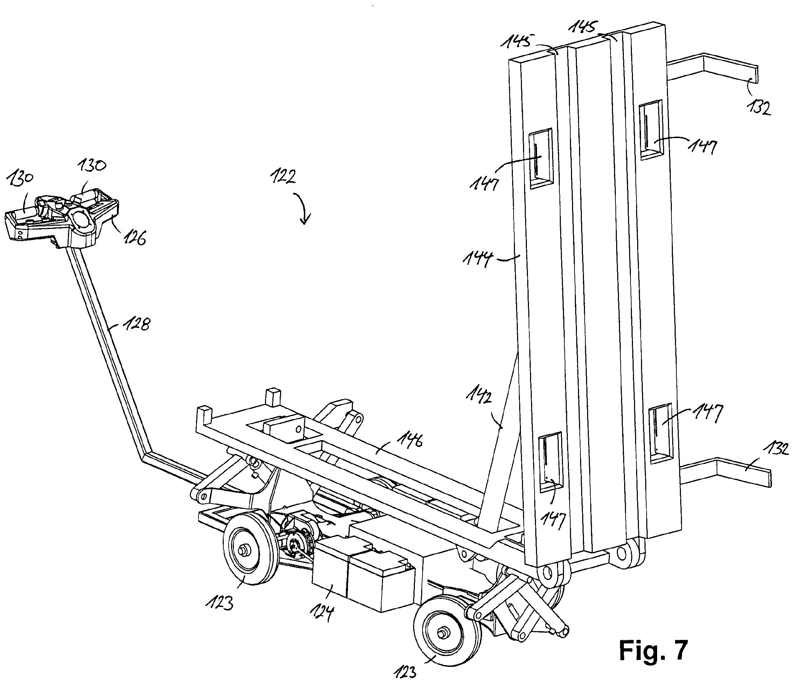

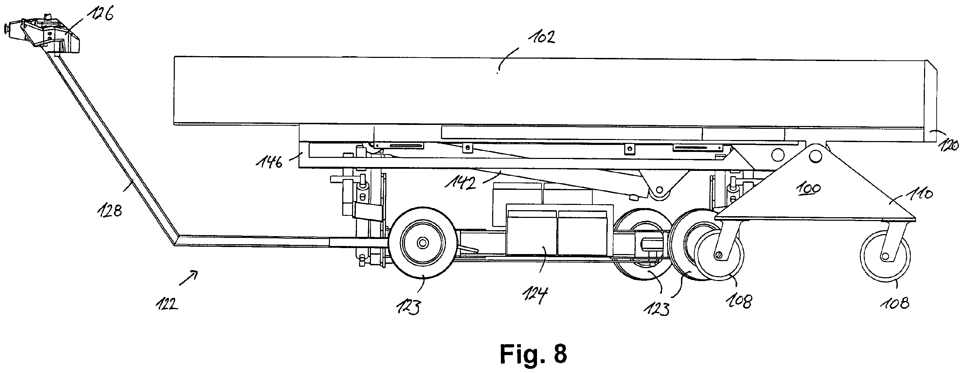

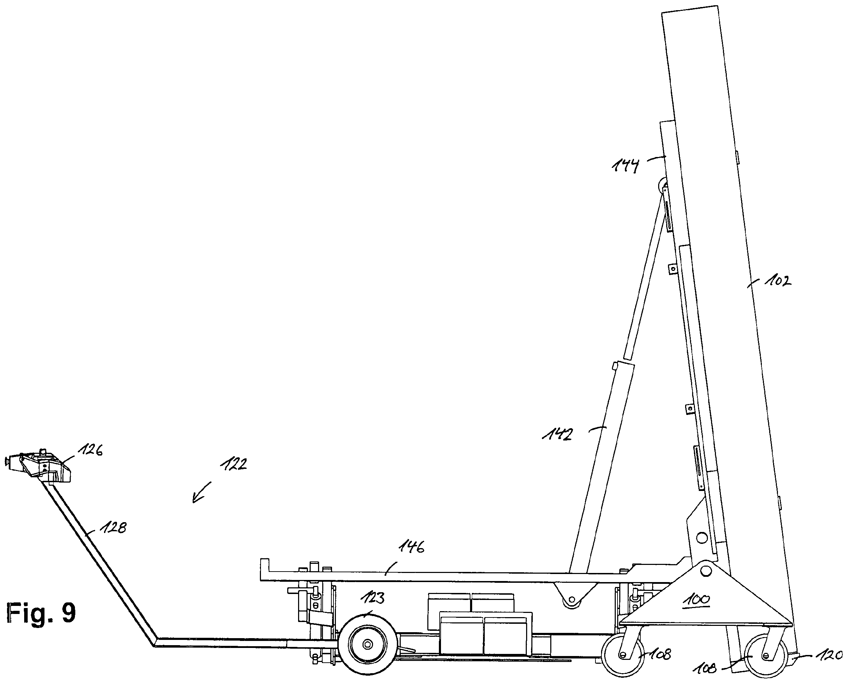

Figs. 4-7 show a cart 122 for supporting the stack of construction boards 102 in an essentially horizontal position and for conveying the stack of construction boards to the storage unit 100 (cf. the above description of Figs. 1-3). The cart is supported by four wheels 123 supported by a frame 125 of the cart. Lifting, lowering and tilting of the stack of construction boards is thus effected by hydraulic means, which are supplied with power from a battery pack 124, and manoeuvring of the stack of construction boards 102 is controlled by a hand-operable control panel 126 provided at the free end of a control rod 128 connected to the frame 125. The control panel 126 is integral with hand grips 130, which allow an operator to steer the cart as it is driven along by an electric motor mounted on the wheel axle nearest to the control panel 126, cf. Fig.7. In case the cart is not motor driven, the hand grips 130 may be used by the operator to push and draw the cart along. In preferred embodiments of the cart 122, a rear and/or a front pair of the wheels 123 is controllable to change the direction of movement of the cart, i.e. the pair of wheels may be turned relative to the frame of the cart. This is illustrated in Figs. 5-7, in which the front pair of wheels is turned relative to the frame of the cart. Optionally, motor driven means may be provided for conveying the cart. Edge supports 132 are integral with the frame of the cart for supporting the stack of construction boards 102 in a tilted position as shown more clearly in Figs. 5 and 6. In Figs. 5 and 6, the stack of construction boards is tilted in a plane transverse to the direction of movement of the cart 122. Tilting is effected by a hydraulic cylinder co-operating with a kinematical system of pivotally interconnected rods 136,138,140, so as to effect tilting of the stack 102 while maintaining the centre of gravity of the stack within the plane spanned by the four wheels 123. Such tilting allows for conveying of the stack 102 through narrow passages, e.g. door openings. Thus, the width of the cart 122, i.e. the distance between left and right wheels 123 is preferably smaller than the width of standard door openings before they are fitted with door frames. Fig. 7 illustrates tilting of the stack of construction boards (not shown in Fig. 7) around an axis transverse to the direction of movement of the cart. For this purpose, the cart is provided with a hydraulic cylinder 142 engaging a supporting member 144 for the stack of construction boards. The supporting member 144 is provided with two parallel grooves 145 extending longitudinally along the supporting member 144. The function of the grooves 145 is described below with reference to Figs. 8 and 9. In the horizontal position of the stack of construction boards 102, the stack supporting member 144 is supported by a frame section 146 of the cart.

In Fig. 8, the cart 122 is positioned next to the storage unit 100 described in detail above with reference to Figs. 1-3. The frame 112 of the storage unit 100 is in the horizontal position (cf. Fig. 3), and the board supporting member 144 of the cart 122 is aligned with the frame 112. That part of the frame 112, which extends away from the support structure 110, i.e. that part of the frame, which extends upwardly in Fig. 1 and to the right in Fig. 3, comprises two rods extending in parallel at a mutual distance which corresponds to the distance between the grooves 145 provided in the frame section 146 of the cart 122 (cf. Fig. 7). These rods are at a distance which corresponds to a width slightly wider than that of the supporting member 144. The grooves 145 hence serve as guides for the frame 112 to ensure proper alignment of the frame 112 and the cart 122. In an alternative embodiment, the actual outside edges of supporting member 144 may ensures adequate alignment between the cart and the storage unit.

The supporting member 144 is equipped with two or more connected lifting pads. Fig. 7 shows the recesses for such lifting pads. These pads lie flush with the upper surface of the supporting frame 144 in its normal position. On collection of boards mounted on trestles, the cart is driven between the trestle legs until the cart is situated below the boards in the desired position. The hydraulically operated lifting pads 147 are then raised to support the weight of the boards and to give adequate clearance for the trestles to be collapsed and withdrawn. With the trestles removed, the lifting pads can be lowered again until the boards are supported by the supporting frame 144. Transfer of construction boards from the cart to the storage unit uses a similar approach, whereby the construction boards are lifted by the lifting pads to an adequate height to allow the storage unit to be slid in it's horizontal position beneath the construction boards and fitting with the cart until the cart/storage unit latch coupling is activated and the support legs 116 lowered to the floor. The lifting pads can then be lowered until the construction boards are supported by the storage device. At this point the cart can either be employed to raise the storage unit to the tilted position or removed leaving construction boards to be stored in a horizontal fashion.

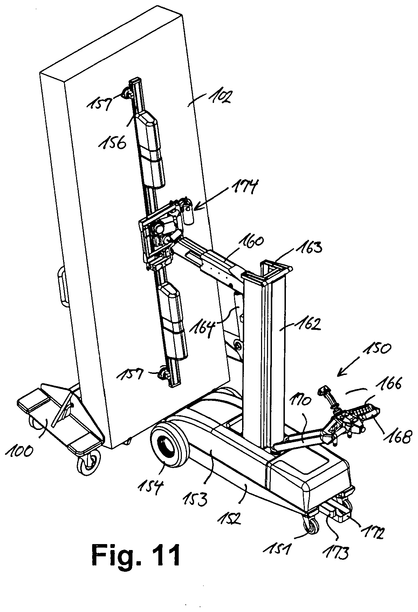

Figs. 10 and 11 show the storage unit 100 coupled to a mounting device 150 for individually lifting and mounting the construction boards 102 at a floor, wall or ceiling as well as inclined surfaces. A ground frame 152 is supported by two pairs of wheels 151 and 154, the wheels of the first pair 151 having a smaller diameter and being arranged at a smaller mutual distance than the wheels of the second pair. The mounting device 150 comprises a powered board positioning system comprising a board supporting structure 156, and an actuator assembly 174, the actuator assembly comprising first, second and third actuators being protected by a cover 158. A plurality of suction cups 157, e.g. three suction cups, are provided at the board supporting structure 156 for gripping the construction boards 102, the suction cups being preferably supplied with vacuum from a vacuum pump provided at the ground frame 152 behind the cover 153. Alternatively, each suction cup may be supplied with vacuum from it's own vacuum pump, the pumps being situated not at the ground frame but behind covers 159 mounted on the board supporting structure 156. The vacuum pump or pumps is/are preferably operated from the control panel 166.

The actuator assembly is shown in detail in Figs. 11-13. It is mounted to a telescopic arm 160, which in turn is mounted in an upright tower 162 being secured to the ground frame 152. Although not shown clearly in the drawings, the tower 162 is itself telescopic to achieve a maximum lifting height, the tower 162 being thus provided with a movable inner tower 163. The telescopic arm 160 is pivotally connected to the tower 162 in such a way that the arm 160 may be rotated relative to the tower 162 by means of a fourth actuator, e.g. an electro/mechanical actuator 164. Additionally, the arm 160 together with its actuator 164 is attached to the tower 162 via a central shuttle or lift (not shown). This enables both arm and actuator to move in the vertical plane from a bottom position to a fully extended position where the inner tower 163 is in its fully extended position relative to the outer tower. The motive force to raise and lower the lift and to extend and retract the inner tower is supplied by an electric motor situated on the ground frame 152 via a closed chain arrangement situated vertically on the rear of the outer tower 162. When the arm 160 is positioned at the top position of either the inner tower or the outer tower, the actuator 164 can rotate the arm to varying angles up to a maximum vertical inclination thus enabling construction boards to be mounted from the vertical through all angles to a horizontal or ceiling position. Optionally, board securing devices in the form of automatic screwing or nailing machines may be provided for securing the construction boards 102 at their respective mounting spots. Operation of the first, second, third, fourth and optionally further actuators, including the actuator 164, as well as the suction cups 157, may be controlled by an operator from a combined joystick and control panel 166 provided adjacent to hand grips 168, which allow an operator to steer the mounting device 150 as it is driven along. For improved ergonomics, the control panel 166 is arranged at a free end of a control rod 170, which is pivotally connected to the ground frame 152, using a parallelogram arrangement to ensure the control panel 166 remains perpendicular to the mounting device. Release and locking of the parallelogram arrangement is via a foot pedal 173. Coupling of the storage unit 100 to the mounting device 152 is effected by means of the male coupling rod 104 of the storage unit 100 (cf. Figs. 1-3) which is received in a female receiving section provided (not shown) in a ground frame 152 of the mounting device 150. The female receiving section includes a clamping system for securing the coupling rod 104 thereto, the clamping system being controllable by a foot pedal 172. In Fig. 11, the cover 158 is removed, details of the actuator assembly 174 thus being visible. The actuators are preferably supplied by power from an accumulator supported by the ground frame 152 and covered by a cover 153. The accumulator may comprise a hydraulic accumulator in the case of hydraulic actuators or, preferably, an electric accumulator in the case of electrically driven actuators.

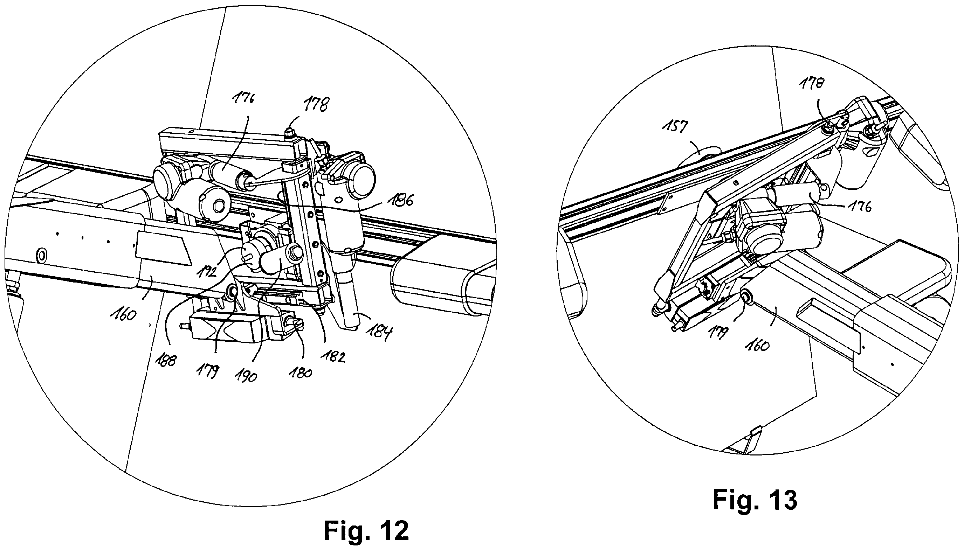

The actuators of the mounting device of Figs. 10 and 11 are shown in detail in Figs. 12 and 13. A first actuator in the form of an electro/mechanical actuator 176 may cause the board supporting structure to rotate around a first axis 178. Rotation around a second axis 179 is effected by the actuator 164. In a preferred embodiment, the actuator 176 may cause rotation about the first axis 178 within an angular range of ±10°. Second and third actuators 180 and 184 may cause linear displacement of the board supporting structure along respective guides 182 and 186. Further, a fifth actuator, preferably a rotational actuator 188 powered by a motor 190, may cause rotation around a third axis 192. In a preferred embodiment, the actuator 188 rotates the board supporting structure within an angular range of ±110°.

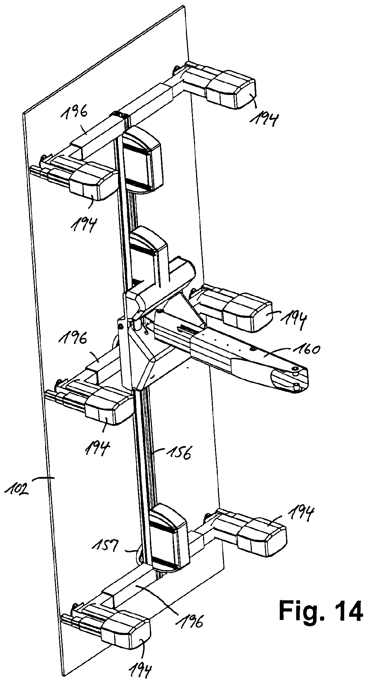

In order to secure the individual construction boards 102 at their respective mounting spots, there may be provided a board securing system comprising a plurality of screwing or nailing machines 194, as illustrated in Fig. 14. The screwing machines are mounted in pairs at opposite ends of respective telescopic arm arrangements 196 providing a mechanism for adjusting a transverse dimension, i.e. the width, of the board supporting structure. The adjusting mechanism may be powered by the accumulator of the mounting device, and it may be controlled from the control panel 166. Likewise, the screwing machines may be controlled from the control panel 166, and they may receive power from the accumulator ditto. Alternatively, they may be operated by the aid of vacuum generated by one single vacuum pump provided e.g. behind the cover 153 of the ground frame 152 (see Figs. 10 and 11) or by individual vacuum pumps integrated in each screwing or nailing machine 194.

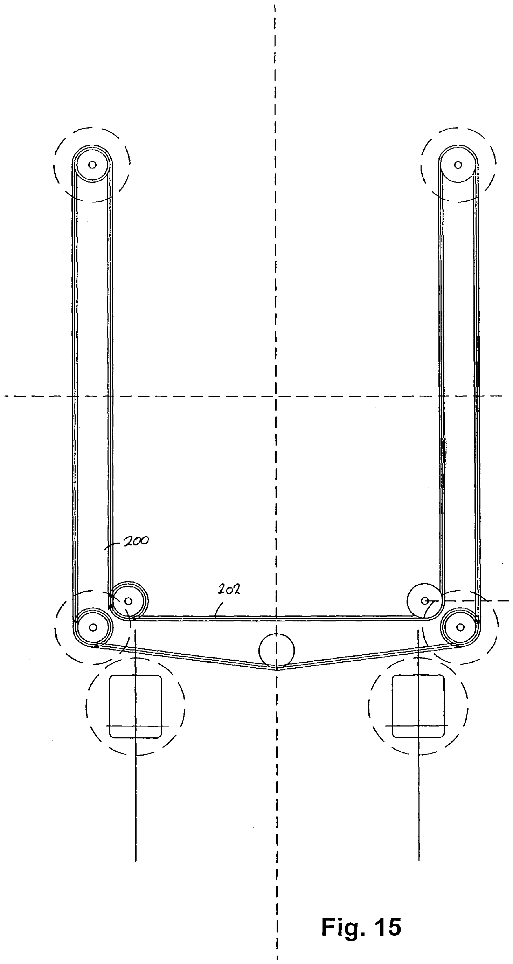

Fig. 15 illustrates a wheel system of a conveying and/or mounting device optionally provided in the set of elements according to the invention. The wheel system includes a frame structure 200, at the corners of which there is provided wheels for conveying the frame in the plane of Fig. 15. The direction of movement is controllable by a chain or belt drive comprising a chain or belt 202 which engages respective pivot axes extending perpendicularly to the plane of Fig. 15 and supporting a front and/or a rear pair of the wheels. Such a conveying device is in particular suitable for mounting operations involving only a few construction boards or for operations which require improved manoeuvring capabilities. The drive system of Fig. 15 may, alternatively, be included in the mounting device 150 of Figs. 10 and 11.

In addition to the above features and elements, a separate device may further be provided for transferring boards from an upright position as shown in Figs. 1, 2 and 6 to an essentially horizontal position. In one embodiment, such a separate device merely comprises means for gripping a board, such as by suction, and transferring it from an upright to a horizontal position. The device may be wheeled and optionally self-propelled.

## Claims

1. A set of elements for handling construction boards (102), such as plaster boards, the set of elements comprising:
- a storage unit (100) for supporting, storing and optionally transporting a stack of the construction boards, the storage unit being adapted to support the stack of construction boards in a first position which is essentially horizontal and to tilt the stack of construction boards to a second position, which is tilted with respect to the first, horizontal position, the storage unit comprising:
- a wheel structure (106) with a plurality of wheels (108) for conveying the storage unit along a floor surface, the wheel structure being arranged to provide a support for the stack of construction boards;
- a frame (112) which is pivotally connected to the wheel structure (106), so that the frame is tiltable between an essentially horizontal position, in which it may support the construction boards in said essentially horizontal position, and a tilted position, in which it may support the construction boards in said tilted position, the frame being connected to the wheel structure (106) at or near one end of the frame (112) and comprising a supporting member (116) at a distance from said end, so that the construction boards may be supported by the supporting member (116) and the wheels (108) in said horizontal position and by the wheels (108) solely in said tilted position;
**characterized in that** the set of elements further comprises
- a cart (122) for supporting the stack of construction boards and for conveying the stack of construction boards to the storage unit (100), the cart comprising:
- a board transferring system for transferring the stack of construction boards from the cart to the storage unit and from and to trestles, the board transferring system comprising a lifting system;
- tilting means for tilting the stack of construction boards around a first axis essentially parallel to the direction of movement of the cart to allow for passage through narrow passages and/or passages with low free heights, and around a second axis transverse to the direction of movement of the cart to raise the construction boards to an upright position, in which the construction boards may be transferred to the storage unit;
wherein the storage unit (100) is adapted to be coupled to the cart when the storage unit is in its first position, so that the stack of construction boards may be lowered by the lifting system of the cart down onto the storage device, and/or vice versa.

2. A set according to claim 1, wherein the board transferring system of the cart comprises a system for manoeuvring the stack of construction boards, the lifting system including a hand-operable control panel (126).

3. A set according to any of claims 1-2 further comprising:
- a mounting device (150) for lifting and mounting the construction boards, the mounting device comprising a powered board positioning system for removing one of the construction boards at a time from the storage unit;
- the set of elements further comprising a coupling system (104; 172) for coupling the storage unit (100) to the mounting device (150).

4. A set according to claim 3, wherein the mounting device (150) further comprises a board supporting structure (156) comprising:
- at least one powered board securing device (194) for securing the construction board at a mounting spot;
- means for aligning and positioning the construction board.

5. A set according to any of claims 3-4, wherein the coupling system (104; 172) is operable to couple the storage unit (100) to the mounting device and to decouple the storage unit from the mounting device by an operating assembly (172) forming part of the mounting device (150).

6. A set according to claim 5, wherein the operating assembly comprises a hand- or foot-operable activation member (172) connected to a clamping system for securing a male coupling rod (104) of the storage unit (100) to a corresponding female receiving portion of the mounting device (150).

7. A set according to any of claims 4-6, wherein the board supporting structure (156) comprises a mechanism (196) for adjusting a transverse dimension of the board supporting structure.

8. A set according to any of claims 5-7, wherein the mounting device (150) comprises a ground frame (152), and wherein the board positioning system is arranged to move and rotate the construction boards relative to the ground frame, the board positioning system defining at least two rotational and three linear degrees of freedom.

9. A set according to any of claims 5-8, wherein the mounting device (150) comprises a hand-operable control panel (166) for the board positioning system.

10. A set according to any of claims 5-9, wherein the mounting device comprises at least one accumulator for supplying power to the board securing device (194) and/or to the board positioning system.

## Patentansprüche

1. Satz von Elementen zum Handhaben von Bauplatten (102), wie Gipsplatten, wobei der Satz von Elementen umfasst:
- eine Lagereinheit (100) zum Tragen, Lagern und fakultativ Transportieren eines Stapels der Bauplatten, wobei die Lagereinheit zum Tragen des Stapels von Bauplatten in einer ersten Position, die im Wesentlichen horizontal ist, und zum Kippen des Stapels von Bauplatten in eine zweite Position, die in Bezug auf die erste, horizontale Position gekippt ist, beschaffen ist, wobei die Lagereinheit umfasst:
- eine Radkonstruktion (106) mit einer Vielzahl von Rädern (108) zum Befördern der Lagereinheit über eine Bodenfläche, wobei die Radkonstruktion zum Bereitstellen einer Tragfläche für den Stapel von Bauplatten angeordnet ist;
- einen Rahmen (112), der drehbar mit der Radkonstruktion (106) verbunden ist, sodass der Rahmen zwischen einer im Wesentlichen horizontalen Position, in der er die Bauplatten in der im Wesentlichen horizontalen Position tragen kann, und einer Kippposition, in der er die Bauplatten in der Kippposition tragen kann, kippbar ist, wobei der Rahmen an oder nahe einem Ende des Rahmens (112) mit der Radkonstruktion (106) verbunden ist und ein Trageglied (116) in einem Abstand zu diesem Ende umfasst, sodass die Bauplatten von dem Trageglied (116) und den Rädern (108) in der horizontalen Position und alleine von den Rädern (108) in der Kippposition getragen werden;
**dadurch gekennzeichnet, dass** der Satz von Elementen weiterhin umfasst
- einen Wagen (122) zum Tragen des Stapels von Bauplatten und zum Befördern des Stapels von Bauplatten zu der Lagereinheit (100), wobei der Wagen umfasst:
- ein Plattentransfersystem zum Transferieren des Stapels von Bauplatten von dem Wagen zu der Lagereinheit und von und zu Stützböcken, wobei das Plattentransfersystem ein Hebesystem umfasst;
- Kippmittel zum Kippen des Stapels von Bauplatten um eine erste Achse, die im Wesentlichen parallel zur Bewegungsrichtung des Wagens ist, um das Passieren enger Durchgänge und/oder Durchgänge mit niedriger freier Höhe zu ermöglichen, und um eine zweite Achse quer zu der Bewegungsrichtung des Wagens, um die Bauplatten in eine aufrechte Position hochzustellen, in der die Bauplatten zu der Lagereinheit transferierbar sind;
wobei die Lagereinheit (100) zum Koppeln an den Wagen beschaffen ist, wenn sich die Lagereinheit in ihrer ersten Position befindet, sodass der Stapel von Bauplatten von dem Hebesystem des Wagens nach unten auf die Lagereinheit abgesenkt werden kann und/oder umgekehrt.

2. Satz nach Anspruch 1, wobei das Plattentransfersystem des Wagens ein System zum Manövrieren des Stapels von Bauplatten umfasst, wobei das Hebesystem ein mit der Hand bedienbares Bedienfeld (126) enthält.

3. Satz nach einem der Ansprüche 1-2, weiterhin umfassend:
- eine Montagevorrichtung (150) zum Anheben und Montieren der Bauplatten, wobei die Montagevorrichtung ein angetriebenes Plattenpositioniersystem zum Abnehmen einer Bauplatte nach der anderen von der Lagereinheit umfasst;
- wobei der Satz von Elementen weiterhin ein Kopplungssystem (104; 172) zum Koppeln der Lagereinheit (100) an die Montagevorrichtung (150) umfasst.

4. Satz nach Anspruch 3, wobei die Montagevorrichtung (150) weiterhin eine Plattentragekonstruktion (156) umfasst, umfassend:
- mindestens eine angetriebene Plattensicherungsvorrichtung (194) zum Sichern der Bauplatten an einer Montagestelle;
- Mittel zum Ausrichten und Positionieren der Bauplatte.

5. Satz nach einem der Ansprüche 3-4, wobei das Kopplungssystem (104; 172) zum Koppeln der Lagereinheit (100) an die Montagevorrichtung und zum Entkoppeln der Lagereinheit von der Montagevorrichtung durch eine Bedienanordnung (172) bedienbar ist, die einen Teil der Montagevorrichtung (150) bildet.

6. Satz nach Anspruch 5, wobei die Bedienanordnung ein mit der Hand oder dem Fuß bedienbares Aktivierungsglied (172) umfasst, das mit einem Spannsystem verbunden ist, um eine Kopplungsstange (104) der Lagereinheit (100) in einem entsprechenden Aufnahmeabschnitt der Montagevorrichtung (150) zu sichern.

7. Satz nach einem der Ansprüche 4-6, wobei die Plattentragekonstruktion (156) einen Mechanismus (196) zum Justieren einer Querabmessung der Plattentragekonstruktion umfasst.

8. Satz nach einem der Ansprüche 5-7, wobei die Montagevorrichtung (150) einen Bodenrahmen (152) umfasst und wobei das Plattenpositioniersystem zum Bewegen und Drehen der Bauplatten in Bezug auf den Bodenrahmen angeordnet ist, wobei das Plattenpositioniersystem mindestens zwei rotatorische und drei lineare Freiheitsgrade festlegt.

9. Satz nach einem der Ansprüche 5-8, wobei die Montagevorrichtung (150) ein mit der Hand bedienbares Bedienfeld (166) für das Plattenpositioniersystem umfasst.

10. Satz nach einem der Ansprüche 5-9, wobei die Montagevorrichtung mindestens einen Akkumulator zum Bereitstellen von Kraft für die Plattensicherungsvorrichtung (194) und/oder das Plattenpositioniersystem umfasst.

## Revendications

1. Ensemble d'éléments pour la manutention de panneaux de construction (102), tels des plaques de plâtre, l'ensemble d'éléments comprenant :
- une unité de stockage (100) pour supporter, stocker, et optionnellement transporter une pile des panneaux de construction, l'unité de stockage étant adaptée pour supporter la pile de panneaux de construction dans une première position qui est sensiblement horizontale et pour incliner la pile de panneaux de construction dans une deuxième position, laquelle est inclinée par rapport à la première position horizontale, l'unité de stockage comprenant :
- une structure à roues (106) avec une pluralité de roues (108) pour acheminer l'unité de stockage le long d'une surface du sol, la structure à roues étant étudiée pour fournir un support pour la pile de panneaux de construction ;
- un cadre (112) relié de manière pivotante à la structure à roues (106) de sorte que le cadre peut être incliné entre une position sensiblement horizontale dans laquelle il peut supporter les panneaux de construction dans ladite position sensiblement horizontale, et une position inclinée dans laquelle il peut supporter les panneaux de construction dans ladite position inclinée, le cadre étant relié à la structure à roues (106) à une extrémité, ou près de celle-ci, du cadre (112) et comprenant un élément de support (116) à une distance de ladite extrémité, de sorte que les panneaux de construction peuvent être supportés par l'élément de support (116) et les roues (108) dans ladite position horizontale et par les roues (108) seulement dans ladite position inclinée ;
**caractérisé en ce que** l'ensemble d'éléments comprend en outre
- un chariot (122) pour supporter la pile de panneaux de construction et pour acheminer la pile de panneaux de construction vers l'unité de stockage (100), le chariot comprenant :
- un système de transfert de panneaux pour transférer la pile de panneaux de construction du chariot vers l'unité de stockage, et à partir de tréteaux et vers ceux-ci, le système de transfert de panneaux comprenant un système de levage ;
- des moyens d'inclinaison pour incliner la pile de panneaux de construction autour d'un premier axe sensiblement parallèle à la direction de déplacement du chariot pour permettre le passage à travers des passages étroits et/ou passages à faibles hauteurs libres, et autour d'un deuxième axe transversal à la direction de déplacement du chariot pour élever les panneaux de construction dans une position dressée où les panneaux de construction peuvent être transférés vers l'unité de stockage ;
dans lequel l'unité de stockage (100) est adaptée pour être accouplée au chariot lorsque l'unité de stockage est dans une première position de sorte que la pile de panneaux de construction peut être abaissée par le système de levage du chariot, vers le bas, sur le dispositif de stockage, et/ou vice versa.

2. Ensemble selon la revendication 1, dans lequel le système de transfert de panneaux du chariot comprend un système pour manoeuvrer la pile de panneaux de construction, le système de levage comprenant un panneau de commande à actionnement manuel (126).

3. Ensemble selon l'une quelconque des revendications 1-2, comprenant en outre :
- un dispositif de montage (150) pour le levage et le montage des panneaux de construction, le dispositif de montage comprenant un système de positionnement de panneaux commandé par moteur pour enlever un des panneaux de construction à la fois du dispositif de stockage ;
- l'ensemble d'éléments comprenant en outre un système d'accouplement (104 ; 172) pour accoupler l'unité de stockage (100) au dispositif de montage (150).

4. Ensemble selon la revendication 3, dans lequel le dispositif de montage (150) comprend en outre une structure de support de panneaux (156) comprenant :
- au moins un dispositif de fixation de panneaux commandé par moteur (194) pour fixer le panneau de construction sur un lieu de montage ;
- des moyens pour aligner et positionner le panneau de construction.

5. Ensemble selon l'une quelconque des revendications 3-4, dans lequel le système d'accouplement (104 ; 172) peut être actionné pour accoupler l'unité de stockage (100) au dispositif de montage et pour découpler l'unité de stockage du dispositif de montage par un ensemble d'actionnement (172) faisant partie du dispositif de montage (150).

6. Ensemble selon la revendication 5, dans lequel l'ensemble d'actionnement comprend un élément d'activation pouvant être actionné par la main ou le pied (172) relié à un système de serrage pour fixer une tige d'accouplement mâle (104) de l'unité de stockage (100) à une partie de réception femelle correspondante du dispositif de montage (150).

7. Ensemble selon l'une quelconque des revendications 4-5, dans lequel la structure de support de panneaux (156) comprend un mécanisme (196) pour régler une dimension transversale de la structure de support de panneaux.

8. Ensemble selon l'une quelconque des revendications 5-7, dans lequel le dispositif de montage (150) comprend un cadre au sol (152), et dans lequel le système de positionnement de panneaux est étudié pour déplacer et faire tourner les panneaux de construction par rapport au cadre au sol, le système de positionnement de panneaux définissant au moins deux degrés de liberté en rotation et trois degrés de liberté linéaires.

9. Ensemble selon l'une quelconque des revendications 5-8, dans lequel le dispositif de montage (150) comprend un panneau de commande à actionnement manuel (166) pour le système de positionnement de panneaux.

10. Ensemble selon l'une quelconque des revendications 5-9, dans lequel le dispositif de montage comprend au moins un accumulateur pour fournir du courant au dispositif de fixation de panneaux (194) et/ou au système de positionnement de panneaux.
